(19) Europäisches Patentamt / European Patent Office / Office européen des brevets

(11) **EP 4 446 998 A1**

(12) **EUROPEAN PATENT APPLICATION**

(43) Date of publication:
**16.10.2024 Bulletin 2024/42**

(21) Application number: **23188564.1**

(22) Date of filing: **31.07.2023**

(51) International Patent Classification (IPC):
**G06T 17/30** (2006.01)

(52) Cooperative Patent Classification (CPC):
**G06T 17/30;** G06T 2210/21; Y02P 90/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.04.2023 CN 202310383199**

(71) Applicant: **Academy of Mathematics and System Sciences, Chinese Academy of Sciences**
**100190 Beijing (CN)**

(72) Inventor: **CHENG, Jinsan**
**Beijing, 100190 (CN)**

(74) Representative: **Zimmermann, Tankred Klaus et al**
**Schoppe, Zimmermann, Stöckeler Zinkler, Schenk & Partner mbB**
**Patentanwälte**
**Radlkoferstrasse 2**
**81373 München (DE)**

(54) **METHOD AND APPARATUS OF TRACKING INTERSECTION LINE OF CURVED SURFACES PERFORMED BY ELECTRONIC DEVICE, AND ELECTRONIC DEVICE**

(57) Provided is a method of tracking an intersection line of curved surfaces performed by an electronic device, an apparatus, and an electronic device. The method includes: generating a four-dimensional space parameter curve; dividing a parameter space corresponding to the first parametric surface into first surface boxes and a parameter space corresponding to the second parametric surface into second surface boxes; determining intersecting boxes among the first surface boxes and the second surface boxes as target boxes; constructing a tangent vector function model; establishing first and second determination conditions based on the tangent vector function model; marking target box satisfying the first determination condition as a first type box; marking target box satisfying the second determination condition as a second type box; marking target box other than the first type box and the second type box in the target boxes as a zeroth type box; generating tracking points in each type of box; and connecting the tracking points to generate an intersection line of the first parametric surface and the second parametric surface.

FIG. 1

EP 4 446 998 A1

**Description**

TECHNICAL FIELD

The present disclosure relates to a field of computer curved surface intersection technology, and in particular relates to a method and an apparatus of tracking an intersection line of curved surfaces performed by an electronic device, and an electronic device.

BACKGROUND

Finding an intersection of a rational parametric curved surface and a rational parametric curved surface (i.e., SSI) is one of the most fundamental problems in geometric and solid modeling. Rational curved surface intersection is important and commonly used in the representation of complex objects, finite element discretization, computer animation, face recognition, and the like. An intersection of two parametric curved surfaces may have extremely complex topological properties, such as a tangent point, a tangent, an isolated point micro loop, a self-intersection point, and even curved surfaces partially overlapping. In some extreme cases, these singular cases will be mixed together, and when floating point operations are implemented in an actual system, inevitable numerical errors will make their calculations more complex. All of these cases require robust processing under complex geometric operations in close interaction time, which poses a serious challenge to the robustness, accuracy, and efficiency of parameter SSI problems.

The conventional curved surface intersection algorithm does not take into account the topology of various singular cases, thus it may not effectively complete solid modeling in complex curved surface intersection cases in various scenarios, and the modeling accuracy may be low. Moreover, due to the complexity of calculation, the conventional algorithm may not complete the calculation in a short time with a small error, and even a large amount of computing resources are consumed, a calculation result may not be obtained at all.

SUMMARY

In view of the above-mentioned problems, the present invention provides a method of tracking an intersection line of curved surfaces performed by an electronic device, an apparatus, and an electronic device.

An aspect of the present invention provides a method of tracking an intersection line of curved surfaces performed by an electronic device, including:

generating a four-dimensional space parameter curve associated with a first parametric curved surface and a second parametric curved surface according to a function model of the first parametric curved surface and a function model of the second parametric curved surface, and storing the four-dimensional space parameter curve in a register, based on a control instruction through an arithmetic unit, in response to the control instruction generated by a controller;

dividing a parameter space corresponding to the first parametric curved surface into a plurality of first curved surface boxes and dividing a parameter space corresponding to the second parametric curved surface into a plurality of second curved surface boxes so that intersecting boxes among the plurality of first curved surface boxes and the plurality of second curved surface boxes are determined as target boxes, and storing the target boxes in the register, based on the control instruction through the arithmetic unit;

reading the four-dimensional space parameter curve from the register, constructing a tangent vector function model for the four-dimensional space parameter curve, and storing the tangent vector function model in the register. based on the control instruction through the arithmetic unit;

reading the tangent vector function model from the register, and establishing a first determination condition and a second determination condition based on the tangent vector function model, based on the control instruction through the arithmetic unit, so that the target box satisfying the first determination condition is marked as a first type box, the target box satisfying the second determination condition is marked as a second type box, and the target box other than the first type box and the second type box in the target boxes is marked as a zeroth type box;

generating a plurality of tracking points in the first type box, the second type box and the zeroth type box respectively, and connecting the plurality of tracking points to generate an intersection line of the first parametric curved surface and the second parametric curved surface, based on the control instruction through the arithmetic unit; and

displaying the intersection line of the first parametric curved surface and the second parametric curved surface through a display unit.

According to embodiments of the present invention, the first parametric curved surface and the second parametric curved surface are parametric curved surfaces based on various types of curved surface entities and established according to a predetermined drawing scale, and the various types of curved surface entities at least include: a mechanical component curved surface entity, a human body part curved surface entity, and an animation object curved surface entity.

According to embodiments of the present disclosure, the establishing a first determination condition and a second determination condition based on the tangent vector function model includes:

inputting the target box into the tangent vector function model, outputting a target solution set, and storing the target solution set in the register, based on the control instruction through the arithmetic unit; and
reading the target solution set from the register, and establishing the first determination condition and the second determination condition by using the target solution set related to the tangent vector function model, based on the control instruction through the arithmetic unit,.

According to embodiments of the present invention, wherein,

the tangent vector function model includes a first component vector function model, a second component vector function model, a third component vector function model, and a fourth component vector function model;
the target solution set output using the tangent vector function model includes: a first solution set output through the first component vector function model, a second solution set output through the second component vector function model, a third solution set output through the third component vector function model, and a fourth solution set output through the fourth component vector function model;
the first determination condition is that: a zero solution exists in an intersection of the first solution set and the second solution set, or a zero solution exists in an intersection of the third solution set and the fourth solution set; and
the second determination condition is that: a zero solution exists at an intersection of the first solution set, the second solution set, the third solution set, and the fourth solution set.

According to embodiments of the present disclosure, the generating a plurality of tracking points in the first type box, the second type box, and the zeroth type box respectively includes:

generating a plurality of different types of second tracking points for the second type box, wherein the different types of second tracking points at least includes: a tangent point in a case that the first parametric curved surface and the second parametric curved surface are tangent to a point, a tangent point in a case that the first parametric curved surface and the second parametric curved surface are tangent to a curve, a tangent point in a case that the first parametric curved surface and the second parametric curved surface are coincident, a tangent point in a case that the first parametric curved surface and the second parametric curved surface are tangent to an isolated tangent point, and a tangent point in a case that the first parametric curved surface and the second parametric curved surface are tangent to a minimal loop;
generating a plurality of zeroth type tracking points by tracking the zeroth type box, wherein the zeroth type tracking point is a regular intersection point in a case that the first parametric curved surface or the second parametric curved surface is regularly intersected;
generating a plurality of different types of first tracking points for the first type box, wherein the plurality of different types of first tracking points at least includes: a finite number of singular points existing on the first parametric curved surface or the second parametric curved surface, and a singular point on a singular curve existing on the first parametric curved surface or the second parametric curved surface; and
determining a third type box from the zeroth type box to generate a plurality of third tracking points for the third type box, wherein the third tracking point is a self-intersection point of the first parametric curved surface or the second parametric curved surface.

According to embodiments of the present disclosure, the generating a plurality of different types of second tracking points for the second type box includes:

constructing a second discrimination function system according to the tangent vector function model and the four-dimensional space parameter curve; and
subdividing the second type box, according to a number of solutions of the second discrimination function system, to generate the plurality of different types of second tracking points according to the subdivided second type box.

According to embodiments of the present invention, the generating a plurality of different types of first tracking points for the first type box includes:

constructing a sub function system for the first parametric curved surface or the second parametric curved surface;

constructing a first discrimination function system according to the sub function system and the four-dimensional space parameter curve; and

subdividing the first type box, according to a number of solutions of the first discrimination function system, to generate the plurality of different types of first tracking points according to the subdivided first type box.

According to embodiments of the present invention, the determining a third type box from the zeroth type box includes:

establishing a third determination condition according to the tangent vector function model, wherein the third determination condition is that: at least one of a first sub condition, a second sub condition, a third sub condition, and a fourth sub condition is satisfied; the first sub condition is that: no zero solution exists in the first solution set and no zero solution exists in the third solution set; the second sub condition is that: no zero solution exists in the first solution set and no zero solution exists in the fourth solution set; the third sub condition is that: no zero solution exists in the second solution set and no zero solution exists in the third solution set; and the fourth sub condition is that: no zero solution exists in the second solution set and no zero solution exists in the fourth solution set; and

determining the zeroth type box satisfying the third determination condition as an exclusion box, and determining a box other than the exclusion box and a regular box in the zeroth type box as the third type box, wherein the regular box is a box corresponding to the zeroth type tracking point.

Another aspect of the present disclosure provides an apparatus of tracking an intersection line of curved surfaces, including:

a first generation module configured to, generate a four-dimensional space parameter curve associated with a first parametric curved surface and a second parametric curved surface according to a function model of the first parametric curved surface and a function model of the second parametric curved surface, and store the four-dimensional space parameter curve in a register, based on a control instruction through an arithmetic unit, in response to the control instruction generated by a controller;

a division module configured to divide a parameter space corresponding to the first parametric curved surface into a plurality of first curved surface boxes and divide a parameter space corresponding to the second parametric curved surface into a plurality of second curved surface boxes so that intersecting boxes among the plurality of first curved surface boxes and the plurality of second curved surface boxes are determined as target boxes, and storing the target boxes in the register, based on the control instruction through the arithmetic unit;

a construction module configured to read the four-dimensional space parameter curve from the register, construct a tangent vector function model for the four-dimensional space parameter curve, and store the tangent vector function model in the register, based on the control instruction through the arithmetic unit;

a marking module configured to read the tangent vector function model from the register, and establish a first determination condition and a second determination condition based on the tangent vector function model, based on the control instruction through the arithmetic unit, so that the target box satisfying the first determination condition is marked as a first type box, the target box satisfying the second determination condition is marked as a second type box, and the target box other than the first type box and the second type box in the target boxes is marked as a zeroth type box;

a second generation module configured to generate a plurality of tracking points in the first type box, the second type box, and the zeroth type box respectively, and connect the plurality of tracking points to generate an intersection line of the first parametric curved surface and the second parametric curved surface, based on the control instruction through the arithmetic unit; and

a display module configured to display the intersection line of the first parametric curved surface and the second parametric curved surface through a display unit.

Another aspect of the present disclosure provides an electronic device, including: one or more processors; and a memory configured to store one or more programs, wherein the one or more programs, when executed by the one or more processors, cause the one or more processors to execute the method described above.

BRIEF DESCRIPTION OF THE DRAWINGS

The above contents and other objectives, features and advantages of the present invention will be more apparent through the following descriptions of embodiments of the present invention with reference to the accompanying drawings.

FIG. 1 shows a flowchart of a method of tracking an intersection line of curved surfaces according to embodiments of the present invention.

FIG. 2 shows a schematic diagram of three singular cases when curved surfaces intersect.

FIG. 3 shows a schematic diagram of a loop having at least two points on a curve defined by $\Phi$.

FIG. 4 shows a decision tree for various sub-cases for a curved surface tangent case.

FIG. 5 shows a schematic diagram of a classic scenario of various sub-cases for a two-curved surface tangent scenario determined using the decision tree shown in FIG. 4.

FIG. 6 shows a decision tree for various sub-cases in a singular curved surface case.

FIG. 7 shows a schematic diagram of a classic scenario of various sub-cases in a singular curved surface case determined using the decision tree shown in FIG. 6.

FIG. 8 shows a decision tree for various sub-cases in a case of curved surface self-intersection.

FIG. 9 shows a schematic diagram of a classic scenario of various sub-cases in a case of curved surface self-intersection determined using the decision tree shown in FIG. 8.

FIG. 10 schematically shows a structural block diagram of an apparatus of tracking an intersection line of curved surfaces according to embodiments of the present invention.

FIG. 11 schematically shows a block diagram of an electronic device suitable for implementing a method of tracking an intersection line of curved surfaces according to embodiments of the present invention.

## DETAILED DESCRIPTION OF EMBODIMENTS

Embodiments of the present invention will be described below with reference to the accompanying drawings. It should be understood, however, that these descriptions are merely exemplary and are not intended to limit the scope of the present disclosure. In the following detailed descriptions, for purposes of explanation, numerous specific details are set forth in order to provide a thorough understanding of embodiments of the present invention. It is obvious, however, that one or more embodiments may be implemented without these specific details. In addition, in the following descriptions, descriptions of well-known structures and technologies are omitted to avoid unnecessarily obscuring the concept of the present invention.

Terms used herein are for the purpose of describing embodiments only and are not intended to limit the present invention. Terms "comprising", "including" and the like used herein specify a presence of the feature, step, operation and/or component, but do not preclude a presence or addition of one or more other features, steps, operations or components.

All terms (including technical and scientific terms) used herein have the meaning as commonly understood by those skilled in the art, unless otherwise defined. It should be noted that the terms used herein should be construed to have meanings consistent with the context of the present description and should not be construed in an idealized or overly rigid manner.

Where expressions like "at least one of A, B, and C, etc." are used, they should generally be interpreted in accordance with the meaning of the expression as commonly understood by those skilled in the art (e.g., "a system having at least one of A, B and C" should include, but not be limited to, a system having A alone, having B alone, having C alone, having A and B, having A and C, having B and C, and/or having A, B, C, etc.).

The method of embodiments of the present disclosure may be applied to geometric entity modeling scenarios, for example, in a process of modeling various types of complex curved surface entities such as a mechanical component curved surface entity, a human body part curved surface entity, and an animation object, etc., modeling situations in which two curved surfaces intersect may be frequently encountered. Various types of singular cases may occur due to complex curved surface geometric structures and various intersection situations, for example, curved surface singularity, curved surface tangency, isolated point micro loop, self-intersection point, and even curved surfaces partially overlapping. The conventional curved surface intersection algorithm does not take into account the topology of various singular cases, thus it may not effectively complete solid modeling in complex curved surface intersection cases in various scenarios, and the modeling accuracy may be low. Moreover, due to the complexity of calculation, the conventional algorithm may not complete the calculation in a short time with a small error, and even a large amount of computing resources are consumed, a calculation result may not be obtained at all.

In view of the above, the present invention proposes a method of tracking an intersection line of curved surfaces, which may track intersection points in various singular cases during a modeling process, thereby generating the intersection line of curved surfaces and ensuring the topological properties of the calculated intersection line.

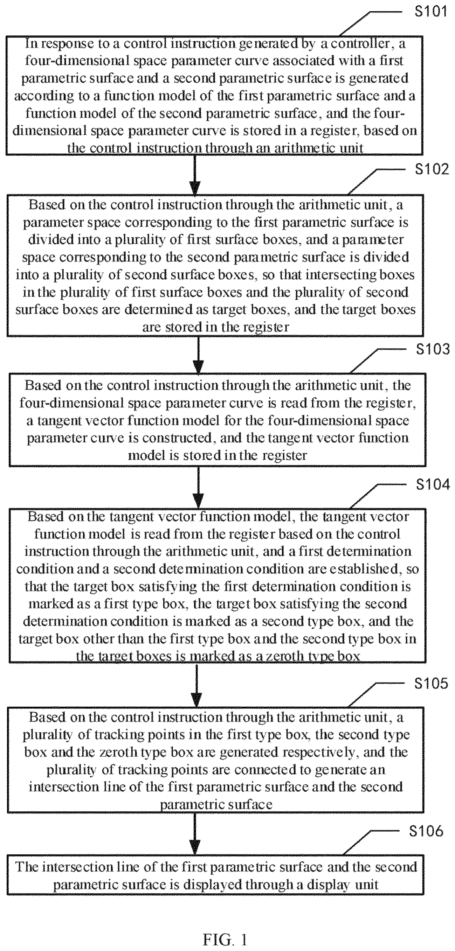

FIG. 1 shows a flowchart of a method of tracking an intersection line of curved surfaces according to embodiments of the present invention.

As shown in FIG. 1, the method of tracking an intersection line of curved surfaces in the embodiment includes operation S101 to operation S 106.

In operation S101, in response to a control instruction generated by a controller, a four-dimensional space parameter curve associated with a first parametric curved surface and a second parametric curved surface is generated according to a function model of the first parametric curved surface and a function model of the second parametric curved surface, and the four-dimensional space parameter curve is stored in a register, based on the control instruction through an arithmetic unit.

The function model of the first parametric curved surface $R_1$ is as the following formula (1):

$$R_1(s, t) = \left(\frac{F_1(s,t)}{F_4(s,t)}, \frac{F_2(s,t)}{F_4(s,t)}, \frac{F_3(s,t)}{F_4(s,t)}\right) \quad (1)$$

The function model of the second parametric curved surface $R_2$ is as the following formula (2):

$$R_2(u, v) = \left(\frac{G_1(u,v)}{G_4(u,v)}, \frac{G_2(u,v)}{G_4(u,v)}, \frac{G_3(u,v)}{G_4(u,v)}\right) \quad (2)$$

$(s,t) \in [0,1] \times [0,1]$, $(u, v) \in [0,1] \times [0,1]$, $s$, $t$, $u$, $v$ are independent parameter variables, the four-dimensional space parameter curve $\Psi$ corresponding to the two parametric curved surfaces may be generated based on $R_1(s, t)$ and $R_2(u, v)$, which is as the following formula (3):

$$\Psi = \left(\frac{F_1(s,t)}{F_4(s,t)} - \frac{G_1(u,v)}{G_4(u,v)}, \frac{F_2(s,t)}{F_4(s,t)} - \frac{G_2(u,v)}{G_4(u,v)}, \frac{F_3(s,t)}{F_4(s,t)} - \frac{G_3(u,v)}{G_4(u,v)}\right) \quad (3)$$

This is the calculated curve in the four-dimensional parameter space.

A curve where $R_1$ and $R_2$ are intersected is defined as $\mathcal{C}$, $\mathcal{C}$ may be regarded as a mapping of $\Psi$, and the mapping is as the following formula (4) or formula (5).

$$\mathcal{C} = \left\{ \left(\frac{F_1(s,t)}{F_4(s,t)}, \frac{F_2(s,t)}{F_4(s,t)}, \frac{F_3(s,t)}{F_4(s,t)}\right) \middle| (s, t) \in \pi_1\big(V(\Psi)\big) \right\} \quad (4)$$

$$\mathcal{C} = \left\{ \frac{G_1(u,v)}{G_4(u,v)}, \frac{G_2(u,v)}{G_4(u,v)}, \frac{G_3(u,v)}{G_4(u,v)} \middle| (u, v) \in \pi_2\big(V(\Psi)\big) \right\} \quad (5)$$

$\pi_1 := (s, t, u,v) \rightarrow (s, t)$, $\pi_2 := (s, t, u,v) \rightarrow (u, v)$. $V(\Psi)$ is a point set of $\Psi$ in the 4D parameter space, and $\Psi$ is used instead of $V(\Psi)$ in the description later.

In operation S102, based on the control instruction through the arithmetic unit, a parameter space corresponding to the first parametric curved surface is divided into a plurality of first curved surface boxes, and a parameter space corresponding to the second parametric curved surface is divided into a plurality of second curved surface boxes, so that intersecting boxes in the plurality of first curved surface boxes and the plurality of second curved surface boxes are determined as target boxes, and the target boxes are stored in the register.

Specifically, BVH (Bounding Volume Hierarchy) is established for two rational parametric curved surfaces $R_1$ and $R_2$, respectively, and some boxes of the two subdivided curved surfaces are obtained. The intersecting target boxes on the two curved surfaces are put into a box set $\mathcal{L}_B$. In this way, it is convenient to quickly check an intersection line of the curved surfaces, which may serve for the range limitation of the solution and the estimation of the function range, and may provide interval subdivision for the isolation of the solution.

In operation S 103, based on the control instruction through the arithmetic unit, the four-dimensional space parameter curve is read from the register, a tangent vector function model for the four-dimensional space parameter curve is constructed, and the tangent vector function model is stored in the register.

In the process of intersection line tracking, the tangent vector of the curve is very important and plays an important role in determining a type of intersection point. Below, the tangent vector of the four-dimensional space parameter curve $\Psi$ is first calculated, and the tangent vector function model for the four-dimensional space parameter curve is constructed.

The Jacobian matrix of the four-dimensional space parametric curve $\Psi$ is as the following formula (6):

$$J_\Psi = \begin{pmatrix} \partial\dfrac{\frac{F_1(s,t)}{F_4(s,t)}}{\partial s} & \partial\dfrac{\frac{F_1(s,t)}{F_4(s,t)}}{\partial t} & -\partial\dfrac{\frac{G_1(u,v)}{G_4(u,v)}}{\partial u} & -\partial\dfrac{\frac{G_1(u,v)}{G_4(u,v)}}{\partial v} \\ \partial\dfrac{\frac{F_2(s,t)}{F_4(s,t)}}{\partial s} & \partial\dfrac{\frac{F_2(s,t)}{F_4(s,t)}}{\partial t} & -\partial\dfrac{\frac{G_2(u,v)}{G_4(u,v)}}{\partial u} & -\partial\dfrac{\frac{G_2(u,v)}{G_4(u,v)}}{\partial v} \\ \partial\dfrac{\frac{F_3(s,t)}{F_4(s,t)}}{\partial s} & \partial\dfrac{\frac{F_3(s,t)}{F_4(s,t)}}{\partial t} & -\partial\dfrac{\frac{G_3(u,v)}{G_4(u,v)}}{\partial u} & -\partial\dfrac{\frac{G_3(u,v)}{G_4(u,v)}}{\partial v} \end{pmatrix} \quad (6)$$

Then a tangent vector of $\Psi$ at $p \in [0,1]^4$ is:

$$\mathrm{T}_\Psi = \left( T_\Psi^1(\mathrm{p}), -T_\Psi^2(\mathrm{p}), T_\Psi^3(\mathrm{p}), -T_\Psi^4(\mathrm{p}) \right) \quad (7)$$

Here $T_\Psi^i$ is a determinant of $J_\psi$ minus the $i^{th}$ column.

As shown in the formula (7) described above, the tangent vector function model includes a first component vector function model $T_\Psi^1(\mathrm{p})$, a second component vector function model $T_\Psi^2(\mathrm{p})$, a third component vector function model $T_\Psi^3(\mathrm{p})$, and a fourth component vector function model $T_\Psi^4(\mathrm{p})$.

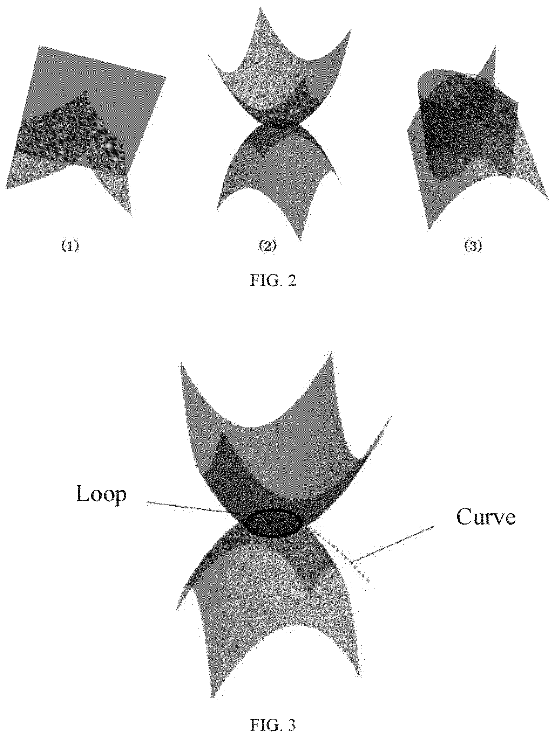

FIG. 2 shows a schematic diagram of three singular cases when curved surfaces intersect.

As shown in FIG. 2, three singular cases in the case of curved surface intersection include curved surface singularity (as shown in figure (1) of FIG. 2), curved surface tangency (as shown in figure (2) of FIG. 2), and curved surface self-intersection (as shown in figure (3) of FIG. 2).

Based on this, by establishing determination conditions, the boxes associated with the three situations are preliminarily distinguished.

Specifically, in operation S104, based on the control instruction through the arithmetic unit, the tangent vector function model is read from the register, and a first determination condition and a second determination condition are established based on the tangent vector function model, so that the target box satisfying the first determination condition is marked as a first type box $C_1$, the target box satisfying the second determination condition is marked as a second type box $C_2$, and the target box other than the first type box and the second type box in the target boxes is marked as a zeroth type box $C_0$.

The first type box $C_1$ is associated with a curved surface singular case, the second type box $C_2$ is associated with a curved surface tangency case, and the zeroth type box $C_0$ is associated with a curved surface self-intersection case and a curved surface regularization case. It should be noted that, here, the intersecting target boxes on two curved surfaces are primarily classified, and the box types are marked temporarily, which does not represent that all the first type boxes $C_1$ are boxes with curved surface singularity, does not represent that all the second type boxes $C_2$ are boxes with curved surface tangency, and does not represent that all the zeroth type boxes $C_0$ are boxes with curved surface self-intersection or curved surface regularization intersection, and for specifically corresponding to which type of boxes, the following embodiments of the present invention describe the cases where the primarily classified boxes are further subdivided.

In operation S105, based on the control instruction through the arithmetic unit, a plurality of tracking points in the first type box, the second type box, and the zeroth type box are generated respectively, and the plurality of tracking points are connected to generate an intersection line of the first parametric curved surface and the second parametric curved surface.

According to embodiments of the present disclosure, after the previous processing, the box with a variety of singular cases is subdivided into a box with only a single case. It is only necessary to connect the traced points, and B-spline may be used if necessary.

In operation S106, the intersection line of the first parametric curved surface and the second parametric curved surface is displayed through a display unit.

According to embodiments of the present invention, parametric curved surfaces intersect in a small region and even have many different branches. How to distinguish, isolate and calculate all these solutions is a fundamental and challenging problem, and in numerical implementation, these topological situations are very similar, which inevitably leads to numerical errors caused by floating-point calculations. Conventional curved surface intersection algorithms are either based on numerical calculations or symbolic calculations, but these methods have certain limitations for singular points, implicit curved surfaces, or curved surfaces, or lack theoretical basis, or are severely inefficient. In the conventional algorithm for calculating the intersection line, in the cases of curved surface singularity, tangency and self-intersection, it is easy to make the calculated intersection line unable to maintain its topological properties and build an accurate solid geometric modeling. Generally, the singular cases encountered are the three described above or a combination of them, which increases the complexity of curved surface intersection.

The above-mentioned method of tracking an intersection line of curved surfaces of the present invention achieves topological correctness by establishing a mixed symbol-digit framework, performs space box distinguishing by establishing a first determination condition and a second determination condition based on a tangent vector function model under the mixed condition, and may simplify various mixed cases into a single case by distinguishing various singular cases, thereby finding out all singular cases in sequence, tracking the intersection points under various singular cases in the modeling process, generating the intersection line of curved surfaces, ensuring the topological property of the calculated intersection line and improving the accuracy of geometric modeling. The method described above may be used for various situations of complex curved surface intersection modeling, and has high practical application value in the fields of mechanical engineering modeling, finite element discretization, computer animation modeling, face identification and the like.

The method of tracking an intersection line of curved surfaces in the present invention, in a calculation process, divides the parameter space corresponding to the first parametric curved surface and the parameter space corresponding to the second parametric curved surface into a plurality of small boxes (calculation regions) through an arithmetic unit, and converts global calculation into local calculation, so that the parallel calculation of a plurality of local calculations may be achieved in the arithmetic unit. Furthermore, due to the use of parallel calculation, a plurality of threads on the register may synchronously execute computation tasks. During a solving process, the arithmetic unit may improve the computational speed and may obtain computational results in a relatively short time. At the same time, due to the use of local calculation method, the large computational region is divided into a plurality of small computational regions. In the small computational regions, the function system is relatively simple, and the requirements on hardware such as computer registers, arithmetic units and the like are low, the computing speed is improved, and the hardware cost is reduced.

Furthermore, in the calculation process of the arithmetic unit, the intersecting boxes in the plurality of first curved surface boxes and the plurality of second curved surface boxes are determined as the target boxes, and only a small number of boxes (intersecting target boxes) are subjected to identification and subsequent intersection point tracking, without the need to calculate all boxes in the curved surface space. This greatly reduces the computational complexity of the arithmetic unit and improves the processing efficiency of the arithmetic unit. At the same time, in the above-mentioned method, only the target box and the calculation results for the target box are stored in the register, which greatly reduces storage space, reduces hardware requirements for the register, and improves storage efficiency.

According to embodiments of the present invention, the first parametric curved surface and the second parametric curved surface are parametric curved surfaces based on various types of curved surface entities and established according to a predetermined drawing scale, and the various types of curved surface entities at least include: a mechanical component curved surface entity, a human body part curved surface entity, an animation object curved surface entity, and the like.

For example, in a mechanical engineering modeling scene, it is necessary to model appearance components of an automobile body. Since it is not possible to directly manufacture a single body curved surface in modern industrial production, each curved surface needs to be machined separately, and then these curved surface components needs to be spliced to form a complete body. The appearance components of the vehicle body includes, for example, a hood, a front skirt, a rear skirt, a front fender, a rear fender, and the like, and each component is a separate curved surface. The design of the vehicle body shape may be regarded as dividing the whole vehicle body into different curved surface combinations.

Based on this, in the process of modeling automobile body appearance components, the above-mentioned body appearance components (such as a hood, a front skirt, a rear skirt, a front fender, a rear fender, etc.) are respectively converted into parametric curved surfaces (rational B-spline curved surfaces) in the present application, then the modeling of the body is the process of intersection of a plurality of parametric curved surfaces, and the intersection line of two adjacent parametric curved surfaces need to be calculated separately. For example, the first parametric curved surface corresponds to the hood curved surface entity, the second parametric curved surface corresponds to the front skirt curved surface entity, and after the intersection line of the first parametric curved surface and the second parametric curved surface is calculated according to the method of tracking an intersection line of curved surfaces in embodiments of the present invention, the splicing modeling of the hood curved surface entity and the front skirt curved surface entity is achieved. For example, the first parametric curved surface corresponds to the front skirt curved surface entity, the second parametric curved surface corresponds to the front fender curved surface entity, and after the intersection line of the first parametric curved surface and the second parametric curved surface is calculated according to the method of tracking an intersection line of curved surfaces in embodiments of the present invention, the splicing modeling of the front skirt curved surface entity and the front fender curved surface entity is achieved. In this way, after the intersection lines of all adjacent parametric curved surfaces are calculated, the curved surfaces corresponding to all curved surface components are spliced to form a complete the body model, and the modeling of the body is completed.

According to embodiments of the present invention, as shown in the formula (7) described above, the tangent vector function model includes a first component vector function model $T_\Psi^1(p)$, a second component vector function model $T_\Psi^2(p)$, a third component vector function model $T_\Psi^3(p)$, and a fourth component vector function model $T_\Psi^4(p)$.

Furthermore, in operation S104, establishing the first and second decision conditions based on the tangent vector function model may include:

First, based on the control instruction through the arithmetic unit, the target box is input into the tangent vector function model a target solution set is output, and the target solution set is stored in the register, where the target solution set output using the tangent vector function model includes: a first solution set output through the first component vector function model, a second solution set output through the second component vector function model, a third solution set output through the third component vector function model, and a fourth solution set output through the fourth component vector function model.

Afterwards, based on the control instruction through the arithmetic unit, the target solution set is read from the register, and the first determination condition and the second determination condition are established by using the target solution set related to the tangent vector function model.

Furthermore, the first determination condition is that: a zero solution exists in an intersection of the first solution set and the second solution set, or a zero solution exists in an intersection of the third solution set and the fourth solution set.

The second determination condition is that: a zero solution exists at an intersection of the first solution set, the second solution set, the third solution set, and the fourth solution set.

The following describes the theoretical basis for establishing the above-mentioned determination conditions.

After the algebraic theoretical analysis of four-dimensional space parametric curve $\Psi$, the description of the singular case of the intersection line $C$ of $R_1$ and $R_2$ in the three-dimensional parameter space is as the following formulas (8), (9), and (10), respectively.

A case of curved surface singularity:

$$C_1:\{\mathcal{C}(p)\in\mathbb{R}^3\,|\,\frac{\partial R_1(s,t)}{\partial s}\times\frac{\partial R_1(s,t)}{\partial t}\Big|_{(s,t)=\pi_1(p)}=0$$

or

$$\frac{\partial R_2(u,V)}{\partial U}\times\frac{\partial R_1(u,v)}{\partial v}\Big|_{(u,v)=\pi_2(p)}=0,\ \ p\in\Psi\subset\mathbb{R}^4\}\ (8)$$

A case of curved surface tangency:

$$C_2 : \{ \mathcal{C}(p) \in \mathbb{R}^3 \mid \frac{\partial R_1(s,t)}{\partial s} \times \frac{\partial R_1(s,t)}{\partial t}\bigg|_{(s,t)=\pi_1(p)}$$

$$= \lambda \frac{\partial R_2(u,V)}{\partial U} \times \frac{\partial R_1(u,v)}{\partial v}\bigg|_{(u,v)=\pi_2(p)} \neq 0, p \in \Psi \subset \mathbb{R}^4 \} \quad (9)$$

A case of curved surface self-intersection:

$$C_3 : \{ \mathcal{C}(p_1) = \mathcal{C}(p_2) \in \mathbb{R}^3 \mid, \text{ there exists } p_1, p_2 \in \Psi \subset \mathbb{R}^4 \text{ and } p_1 \neq p_2 \} \quad (10)$$

The remaining cases are referred to as regular cases, denoted as $C_0$.

The description of the singular case of the above-mentioned intersection line $C$ in the three-dimensional parameter space is described in the language of the four-dimensional parameter space to obtain the following formula (11) and formula (12), which respectively correspond to the cases of $C_1$ and $C_2$.

That is, the first determination condition is established as:

$$C_1 : 0 \in T_\psi^3(\mathbb{B}) \cap T_\psi^4(\mathbb{B}) \text{ or } 0 \in T_\psi^1(\mathbb{B}) \cap T_\psi^2(\mathbb{B}) \quad (11)$$

That is, a zero solution exists in an intersection of the first solution set $T_\psi^1(\mathbb{B})$ and the second solution set $T_\psi^2(\mathbb{B})$, or a zero solution exists in an intersection of the third solution set $T_\psi^3(\mathbb{B})$ and the fourth solution set $T_\psi^4(\mathbb{B})$.

The second determination condition is established as:

$$C_2 : 0 \in T_\psi^3(\mathbb{B}) \cap T_\psi^4(\mathbb{B}) \cap T_\psi^1(\mathbb{B}) \cap T_\psi^2(\mathbb{B}) \quad (12)$$

That is, a zero solution exists at an intersection of the first solution set $T_\psi^1(\mathbb{B})$, the second solution set $T_\psi^2(\mathbb{B})$, the third solution set $T_\psi^3(\mathbb{B})$, and the fourth solution set $T_\psi^4(\mathbb{B})$.

Here, the cases of $C_1$ and $C_2$ are described first, and the relationship between the case of $C_3$ and the tangent vector will be described in detail in subsequent embodiments.

Furthermore, during the verification process, the existence and uniqueness of the zero solution are involved. The following is an introduction to the numerical algorithm for solving the zero solution used in embodiments of the present disclosure.

For example, an improved Newton algorithm may be used, which is suitable for over-determined systems or equations containing a plurality of zeros. The algorithm may find the real root of system $\Delta$ in box $\mathbb{B}$. The algorithm will return: an empty set, or a finite zero dimensional solution, or a one-dimensional curve solution, or a two-dimensional curved surface. The algorithm is as follows:

(1) A better initial point p may be obtained by using the Gradient method for $\Delta$ at a midpoint of $\mathbb{B}$.

(2) The Newton's method is used for $\Delta$ at the point p.

(2.1) If the Newton's method converges to a point outside $\mathbb{B}$, $\phi$ is output.

(2.2) If the Newton's method converges to a point q in $\mathbb{B}$, q is output.

(2.3) If the Newton's method fails because the matrix is irreversible, then a random hyper plane called L is added, and the current point is transferred to the system $\Delta$, and a new system $\Delta \cap \{L\}$ is calculated.

(2.3.1) If $\Delta \cap \{L\}$ does not have a solution in B, $\Delta$ may have a solution with a high multiplicity in B. We test the solution using a deflation method, and an empty set or a solution may be output.

(2.3.2) If $\Delta \cap \{L\}$ has a solution in $\mathbb{B}$ , $\Delta$ has a curve in $\mathbb{B}$ . If the Newton's method fails again for the system $\Delta \cap \{L\}$ because the matrix is irreversible, the above-mentioned operation is repeated.

The goal of the above-mentioned improved Newton algorithm is to find a solution, but it may not be determined whether there is only one solution, which may result in missing solutions. Therefore, the Newton interval algorithm may be combined to ensure the uniqueness of the solution calculated for each box, so as not to miss solutions. The specific method is as follows:

(1) The Newton's algorithm is used to solve system $\Delta$, and if there is no solution, $\Phi$ is output.
(2) The Newton interval algorithm is used to test whether only one solution of $\Delta$ is included. If so, the solution is output.
(3) Recursive subdivision, sub boxes are checked with the interval Newton's method to ensure that there is only one solution or no solution in the relevant sub boxes (the deflation method may be used if necessary), and all solutions are output.

Based on this, the target box $B \in \mathcal{L}_B$ may be checked by using the above-mentioned two algorithms, and whether there is a zero solution in a function system corresponding to the first determination and the second determination condition is checked, so that the target box is marked. The target box satisfying the first determination condition is marked as a first type box $C_1$, the target box satisfying the second determination condition is marked as a second type box $C_2$, and the target box other than the first type box and the second type box in the target boxes is marked as a zeroth type box $C_0$.

According to embodiments of the present invention, the Newton algorithm may be used to verify the existence of solutions, and the interval Newton algorithm may be used to verify the uniqueness of solutions, and if there are too many zeros in the process of solving the equation set, a deflation algorithm may be utilized.

According to embodiments of the present invention, further, in the process of calculating tracking, a step-by-step method may be utilized. In this way, robustness is ensured through subdivision, computational efficiency is ensured through the step-by-step method, and topology accuracy is ensured through topology analysis methods.

According to embodiments of the present invention, based on this, in operation S105, the generating a plurality of tracking points in the first type box, the second type box, and the zeroth type box respectively includes the following operations.

For the second type box $C_2$, because a curved surface tangency case is associated, and the tangency case is too complex, the tangency condition is processed first, and for the processing of the numerical value, the Newton algorithm, the Newton interval algorithm and the deflation algorithm are utilized.

For the second type box $C_2$, its topological property is determined, branches are tracked based on different sub-cases, and a plurality of different types of second tracking points are generated. The different types of second tracking points at least includes: a tangent point in a case that the first parametric curved surface and the second parametric curved surface are tangent to a point, a tangent point in a case that the first parametric curved surface and the second parametric curved surface are tangent to a curve, a tangent point in a case that the first parametric curved surface and the second parametric curved surface are coincident, a tangent point in a case that the first parametric curved surface and the second parametric curved surface are tangent to an isolated tangent point, and a tangent point in a case that the first parametric curved surface and the second parametric curved surface are tangent to a minimal loop.

The marked zeroth type box $C_0$ is associated with a curved surface self-intersection case and a curved surface regularization case. First, tracking may be carried out, a plurality of zeroth type tracking points are generated by tracking the zeroth type box, and the zeroth type tracking point is a regular intersection point in a case that the first parametric curved surface or the second parametric curved surface is regularly intersected.

In the operation, it is necessary to track the regularization case. In order to avoid excessive energy consumption for searching a plurality of tracking initial points on calculating the plurality of initial points, the tracking of intersection line may be started from a point on the boundary of an initial box, all boxes are tracked, and the selection of the initial point on the boundary uses an interval Newton algorithm to avoid omission.

The marked first type box $C_1$ is associated with a curved surface singular case, the curved surface singular case is classified, branches are tracked according to different sub-cases, a plurality of different types of first tracking points are generated for the first type box, and topology analysis is carried out in the whole initial interval during the operation and the branches are tracked. The plurality of different types of first tracking points at least includes: a finite number of singular points existing on the first parametric curved surface or the second parametric curved surface, and a singular point on a singular curve existing on the first parametric curved surface or the second parametric curved surface.

For the case of curved surface self-intersection, the case is finally checked and branch tracing and topology analysis are carried out, it is necessary to determine a third type box from the zeroth type box to generate a plurality of third tracking points for the third type box, and the third tracking points is a self-intersection point of the first parametric curved surface or the second parametric curved surface.

According to embodiments of the present invention, for the case of curved surface tangency, generating a plurality of different types of second tracking points based on the second type box $C_2$ includes:

First, a second discrimination function system is constructed according to the tangent vector function model and the four-dimensional space parameter curve; afterwards, the second type box is subdivided according to a number of solutions of the second discrimination function system to generate the plurality of different types of second tracking points according to the subdivided second type box.

For the case of tangency, there are two sub-cases: one is a normal tangency case (including a tangent point, a curve tangent, and a coincident curved surface), and the other is a special case (including an isolated tangent point and a minimal loop). FIG. 3 shows a schematic diagram of a loop having at least two points on a curve defined by $\Phi$.

Below, the topological property of the normal tangent case is analyzed first, so that there may be different sub-cases. For the cases, the following formula (13) is satisfied:

$$\frac{\partial R_1(s,t)}{\partial s} \times \frac{\partial R_1(s,t)}{\partial t}\bigg|_{(s,t)=\pi_1(p)}$$

$$= \lambda \frac{\partial R_2(u,V)}{\partial U} \times \frac{\partial R_1(u,v)}{\partial v}\bigg|_{(u,v)=\pi_2(p)} \neq 0 \quad (13)$$

Then, the second discrimination function system constructed according to the tangent vector function model and the four-dimensional space parameter curve is as the following formula (14):

$$\Delta_{\mathbb{B}}(s,t,u,v) = \Psi \cup \left\{ T_\Psi^i(s,t,u,v), i = 1,2,3,4 \right\}, \quad (s,t,u,v) \in \mathbb{B} \quad (14)$$

Then, the second type box is subdivided according to a number of solutions of the second discrimination function system $\Delta_{\mathbb{B}}$ to determine the type of box. The specific discrimination criteria are as follows:

$\#(\Delta_{\mathbb{B}}) = 0$, the function system has no solution, and the corresponding case for this type box is: two curved surfaces are separated or intersect on a regular curve in $\mathbb{B}$.

$\#(\Delta_{\mathbb{B}}) = k$, the function system has a finite number of solutions, and the corresponding case for this type box is: two curved surfaces are tangent at certain individual points in $\mathbb{B}$.

$\#(\Delta_{\mathbb{B}}) = \infty$, the functional system has infinite solutions, and the corresponding case for this type box is: two curved surfaces are tangent along a singular curve or partially overlapping in $\mathbb{B}$.

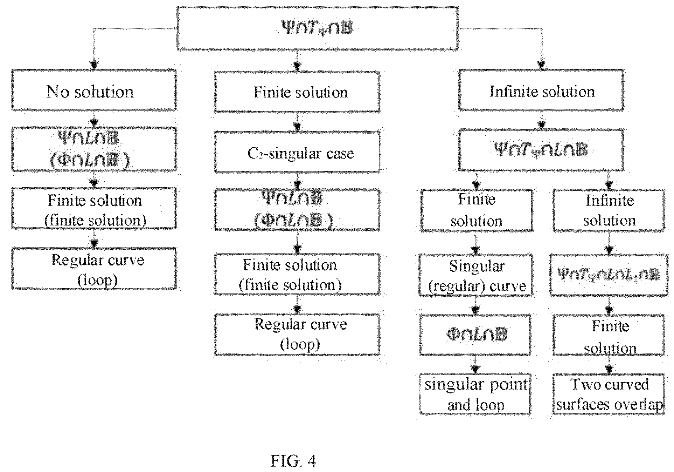

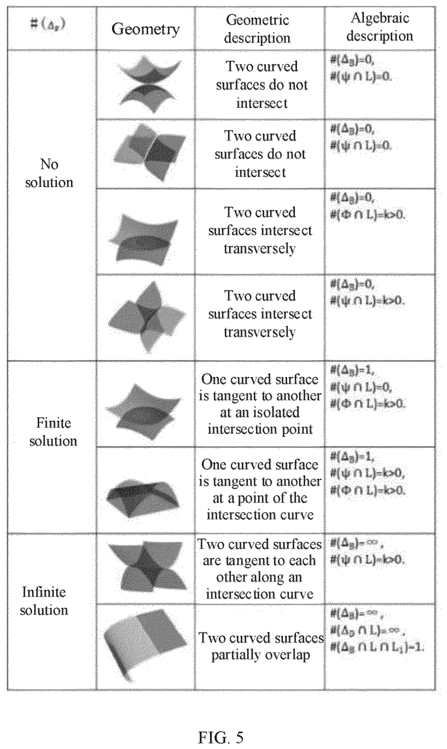

FIG. 4 shows a decision tree for various sub-cases for a curved surface tangent case. FIG. 5 shows a schematic diagram of a classic scenario of various sub-cases for a two-curved surface tangent scenario determined using the decision tree shown in FIG. 4.

As shown in FIG. 4 and FIG. 5, the sub-cases are classified and further subdivided according to the second discrimination function system shown in the formula (14), where L and $L_1$ are randomly selected hyper planes. A new sub function system is established by combining the random hyper plane, and further subdivision discrimination is made according to the number of solutions of the sub function system. The numerical value of "#(x)" in FIG. 5 represents the number of solutions for system x in parentheses.

According to embodiments of the present invention, for special tangent cases (including the isolated tangent point and the minimal loop), the above-mentioned method may not be used because special isolated cases may coexist with other cases of singular points/curves, and the singular points/curves are described as solutions to the same function system, but are difficult to separate out. For special cases, the subsystem $\Phi$ using $\Delta_{\mathbb{B}}$ establishes a regularization system. The following lemma is included:

Let p be an isolated tangent on the intersection line $\Psi$ and satisfy the system $\{\Phi_1, \Phi_2, \Phi_3, \Phi_4\}$ with $\Phi_1 \neq \Phi_2 \in \psi$, $\Phi_3 \# \Phi_4 \in T_\Psi$, then p is on a regular curve that satisfies the following system, which is as the following formula (15):

$$\Phi = \{\Phi_1, \Phi_2, \Phi_3 | \Phi_1, \Phi_2 \in \Psi, \Phi_3 \in T_\Psi\} \quad (15)$$

Any more closed loops must have two points on the regular curve $\Phi$.

Then, according to this lemma, the singular case is transformed into a regular case $\Phi$, and then the isolated singular point may be distinguished from the loop by intersecting $\Phi$ with a randomly generated hyper plane L.

The subdivision method for special tangent cases refers to the bracketed description in the second row of the decision tree node in FIG. 4. For example, in the four nodes in the first column on the left, " $\Phi \cap L \cap \mathbb{B}$ " in the parentheses of the second row in the second node of the first column represents that in a case that the second discrimination function system $\Delta_\mathbb{B}$ has no solution, a sub function system " $\Phi \cap L \cap \mathbb{B}$ " is further established for the special case. The description in parentheses in the second row of the third node in the first column represents the number of solutions for the system " $\Phi \cap L \cap \mathbb{B}$ " is finite. The description in parentheses in the second row of the fourth node in the first column represents that in a case that the number of solutions for the system " $\Phi \cap L \cap \mathbb{B}$ " is finite, the type box corresponds to the minimal loop in the case of special tangency.

In this way, according to the above-mentioned method, the normal tangent case and special case boxes in the tangent cases are subdivided, and the boxes obtained after subdivision are marked as $C_2$.

According to embodiments of the present invention, for the case of curved surface singularity, generating a plurality of different types of first tracking points for the first type box $C_1$ includes:

First, a sub function system is constructed for the first parametric curved surface $R_1(s, t)$ or the second parametric curved surface $R_2(u, v)$.

Here, with $R_1(s, t)$ as an example for illustration, ($R_2(u, v)$ adopts a similar method and will not be repeated here), a sub function system $\Sigma_1(s, t)$ is defined for $R_1(s, t)$, which is as the following formula (16):

$$\Sigma_1(s, t): \frac{\partial R_1(s,t)}{\partial s} \times \frac{\partial R_1(s,t)}{\partial t}, (s, t) \in [0,1]^2 \quad (16)$$

Then, a first discriminant function system $\Delta_\mathbb{B}(s, t, u, v)$ is constructed according to the sub function system and the four-dimensional space parameter curve. The singularity of the curved surface may be referred to as a tip or a curve, then the sub-cases of $C_1$ on the intersection line may be determined by the solution of the following systems $\Delta_\mathbb{B}$ in 4D box $\mathbb{B} \subset [0,1]^4$. The expression of the first discrimination function system $\Delta_\mathbb{B}$ is shown in formula (17) below.

$$\Delta_\mathbb{B}(s, t, u, v) = \Psi(s, t, u, v) \cup \Sigma_1(s, t), (s, t, u, v) \in \mathbb{B} \quad (17)$$

Then, the first type box is subdivided according to a number of solutions of the first discrimination function system $\Delta_\mathbb{B}$ to determine the type of box, so as to generate the plurality of different types of first tracking points according to the subdivided first type box. The specific discrimination criteria are as follows: $\#(\Delta_\mathbb{B}) = 0$, the function system has no solution, and the corresponding case for this type box is: the intersection line has no singular point or a singular curve of the type $C_1$ on $R_1(s, t)$. $\#(\Delta_\mathbb{B}) = k$, the function system has a finite number of solutions, and the corresponding case for this type box is: the intersection line has a finite number of singular points on $R_1(s, t)$. $\#(\Delta_{\mathbb{B}}) = \infty$, the functional system has infinite solutions, and the corresponding case for this type box is: the intersection line has a singular curve on $R_1(s,t)$.

Generally speaking, if $T_{\Psi}^3 = T_{\Psi}^4 = 0$, then $T_{\Psi}^1 \neq 0$, $T_{\Psi}^2 \neq 0$, and if $T_{\Psi}^3, T_{\Psi}^4, T_{\Psi}^1, T_{\Psi}^2$, are equal to zero, then it is possible that $T_{\psi} = 0$ at that point, which may be solved by using the Newton algorithm and the interval Newton algorithm.

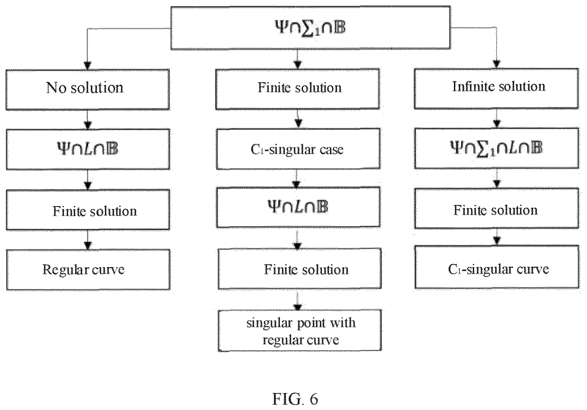

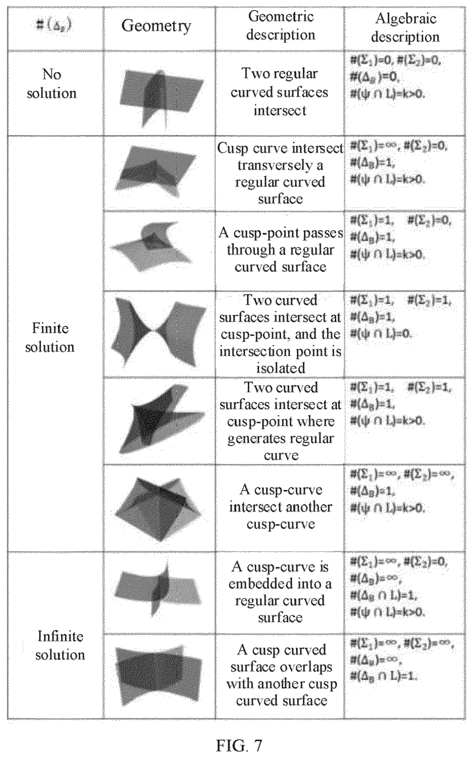

FIG. 6 shows a decision tree for various sub-cases in a singular curved surface case. FIG. 7 shows a schematic diagram of a classic scenario of various sub-cases in a singular curved surface case determined using the decision tree shown in FIG. 6. FIG. 6 and FIG. 7 show that the first type box is subdivided based on the number of solutions of the first discrimination function system $\Delta_{\mathbb{B}}$, and the sub-cases are further subdivided, the singularity is calculated in the whole define domain $[0,1]^4$, where L is a randomly selected hyper plane, a new sub function system is established by combining the random hyper plane, further subdivision determination is performed according to the number of solutions of the sub function system, all the singular cases are calculated, and finally the obtained box is marked as $C_1$.

According to embodiments of the present invention, the marked zeroth type box $C_0$ may be associated with the case of curved surface self-intersection and the case of regularization. For the box of the regularization case, the regular intersection point is tracked by first tracking the marked zeroth type box $C_0$ in the aforementioned embodiment.

For the case of curved surface self-intersection, this case is finally checked, and the tracking of branches and topology analysis is carried out, and the third type box $C_3$ needs to be determined from the zero type box $C_0$, so that a plurality of third tracking points (self-intersection points) are generated for the third type box. Specifically, whether the box belongs to the case of self-intersection or not may be determined firstly, if yes, the box is further classified, and branches are tracked according to different sub-cases.

The determining the third type box from the zeroth type box, i.e., determining whether the box belongs to self-intersection includes:

First, a third determination condition is established according to the tangent vector function model, where the third determination condition satisfies at least one of a first sub condition, a second sub condition, a third sub condition, and a fourth sub condition; the first sub condition is that: no zero solution exists in the first solution set and no zero solution exists in the third solution set; the second sub condition is that: no zero solution exists in the first solution set and no zero solution exists in the fourth solution set; the third sub condition is that: no zero solution exists in the second solution set and no zero solution exists in the third solution set; and the fourth sub condition is that: no zero solution exists in the second solution set and no zero solution exists in the fourth solution set;

Then, the zeroth type box meeting the third determination condition is determined as an exclusion box, and a box other than the exclusion box and a regular box in the zeroth type box is determined as the third type box, wherein the regular box is a box corresponding to the zeroth type tracking point.

According to embodiments of the present invention, the case of self-intersection is regarded as that more than two points on the four-dimensional space parameter curve are mapped to the same point on the intersection line in three-dimensional space. Taking $R_1(s, t)$ as an example for illustration, ($R_2(u, v)$ adopts a similar method and will not be repeated here), assuming that $R_1(s, t)$ is a self-intersection curved surface, and a function system as shown in the following formula (18) is established:

$$\Delta_B(s, t, p, q, u, v) = \{R_1(s, t) = R_1(p, q) = R_2(u, v),$$

$$(s, t, u, v) \in \Psi \subset \mathbb{B}_1, (p, q, u, v) \in \mathbb{B}_2, (s, t) \neq (p, q)\}, (18)$$

$$B = \pi_1(\mathbb{B}_1) \times \pi_1(\mathbb{B}_2) \times \big(\pi_2(\mathbb{B}_1) \cap \pi_2(\mathbb{B}_2)\big).$$

In order to better determine the case of self-intersection, the theorem 1 below provides a regularity test condition to determine that a given box $\mathbb{B} \subset \mathbb{R}^4$ has a one-to-one point in box $\mathbb{B}_x \subset \mathbb{R}^3$.

Theorem 1: Given two parametric curved surfaces $R_1(s, t)$ and $R_2(u, v)$, their intersection line $\Psi$, an interval box $\mathbb{B} \subset [0,1]^4$, with a tangent vector of $T_{\Psi}^i(s, t, u, v)$, $i$ = 1,2,3,4, two points $p, q \in \mathbb{B} \cap \Psi$, then, a point

mapping on the intersection line,

$$\mathcal{C}(\mathrm{p}) = \mathcal{C}(\mathrm{q}) \Leftrightarrow \mathrm{p} = \mathrm{q},$$

if the box $\mathbb{B}$ satisfies the above-mentioned third determination condition established based on the tangent vector function model, that is, at least one of the following sub conditions is satisfied:

First sub condition: $0 \notin T_\Psi^1(\mathbb{B})$ and $0 \notin T_\Psi^3(\mathbb{B})$, that is, no zero solution exists in the first solution set $T_\Psi^1(\mathbb{B})$ and no zero solution exists in the third solution set $T_\Psi^3(\mathbb{B})$;

Second sub condition: $0 \notin T_\Psi^1(\mathbb{B})$ and $0 \notin T_\Psi^4(\mathbb{B})$, that is, no zero solution exists in the first solution set $T_\Psi^1(\mathbb{B})$ and no zero solution exists in the fourth solution set $T_\Psi^4(\mathbb{B})$;

Third sub condition: $0 \notin T_\Psi^2(\mathbb{B})$ and $0 \notin T_\Psi^3(\mathbb{B})$, that is, no zero solution exists in the second solution set $T_\Psi^2(\mathbb{B})$ and no zero solution exists in the third solution set $T_\Psi^3(\mathbb{B})$;

Fourth sub condition: $0 \notin T_\Psi^2(\mathbb{B})$ and $0 \notin T_\Psi^4(\mathbb{B})$, that is, no zero solution exists in the second solution set $T_\Psi^2(\mathbb{B})$ and no zero solution exists in the fourth solution set $T_\Psi^4(\mathbb{B})$.

Then there is the following inference:

Assume that the four-dimensional space parameter curve $\Psi$ and the box boundary $\partial\mathbb{B}$ have two intersection points, and no $T_\Psi^i$, $i$ = 1,2,3,4 is the zero solution on $\mathbb{B} \cap \Psi$, then,

(1) the four-dimensional space parametric curve $\Psi$ has a unique connecting curve segment in the box $\mathbb{B}$;
(2) When mapped to 3D, the unique curve segment does not have a corresponding self-intersection point in the box B. In this way, by using the above-mentioned method, the zero type box meeting the third determination condition may be determined as an exclusion box (not belonging to the case of self-intersection), and the box other than the exclusion box and the regular box (zero type tracking point, i.e., the box corresponding to the regular point) in the zero type box may be determined as the third type box through reverse inference.

Furthermore, after the box containing the point in the four-dimensional curve is determined to belong to the self-intersection case, the box is further classified, and branches are tracked according to different sub-cases.

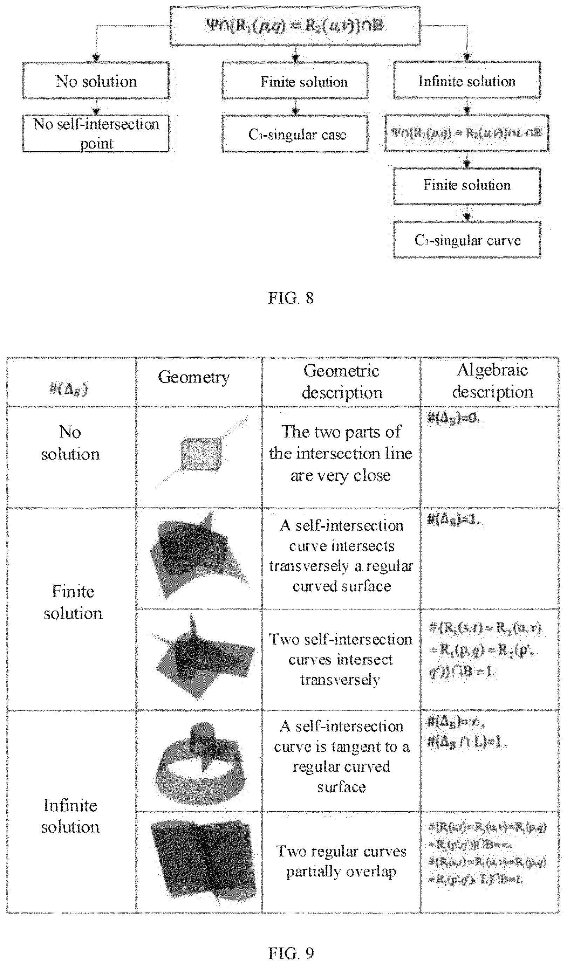

FIG. 8 shows a decision tree for various sub-cases in a case of curved surface self-intersection. FIG. 9 shows a schematic diagram of a classic scenario of various sub-cases in a case of curved surface self-intersection determined using the decision tree shown in FIG. 8.

As shown in FIG. 8 and FIG. 9, sub-cases are further subdivided. For the box belonging to the self-intersection case, similarly, the sub-cases may be classified according to the number of solutions of the function system $\Delta_B$ shown in the formula (18), where L is a randomly generated hyper plane, where L is a randomly selected hyper plane, a new sub function system is established by combining the random hyper plane, further subdivision determination is performed according to the number of solutions of the sub function system, all the self-intersection cases are calculated, and finally the obtained box is marked as $C_3$.

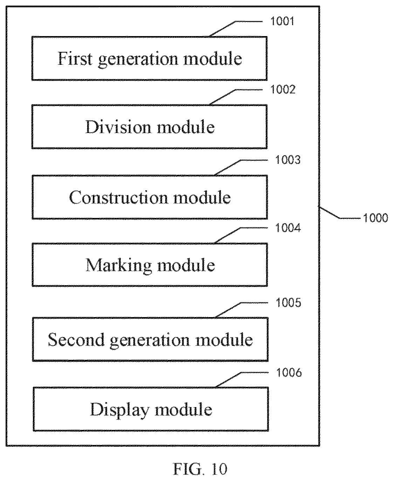

Based on the method of tracking an intersection line of curved surfaces described above, the present invention further provides an apparatus of tracking an intersection line of curved surfaces. The following will provide a detailed description of the apparatus in combination with FIG. 10.

FIG. 10 schematically shows a structural block diagram of an apparatus of tracking an intersection line of curved surfaces according to embodiments of the present invention.

As shown in FIG. 10, an apparatus 1000 of tracking an intersection line of curved surfaces in the embodiment includes a first generation module 1001, a division module 1002, a construction module 1003, a marking module 1004, a second generation module 1005, and a display module 1006.

The first generation module 1001 is configured to, generate a four-dimensional space parameter curve associated with a first parametric curved surface and a second parametric curved surface according to a function model of the first parametric curved surface and a function model of the second parametric curved surface, and store the four-dimensional space parameter curve in a register, based on a control instruction through an arithmetic unit, in response to the control instruction generated by a controller.

The division module 1002 is configured to divide a parameter space corresponding to the first parametric curved surface into a plurality of first curved surface boxes and divide a parameter space corresponding to the second parametric curved surface into a plurality of second curved surface boxes so that intersecting boxes among the plurality of first curved surface boxes and the plurality of second curved surface boxes are determined as target boxes, and storing the target boxes in the register, based on the control instruction through the arithmetic unit.

The construction module 1003 is configured to read the four-dimensional space parameter curve from the register, construct a tangent vector function model for the four-dimensional space parameter curve, and store the tangent vector function model in the register, based on the control instruction through the arithmetic unit.

The marking module 1004 is configured to read the tangent vector function model from the register, and establish a first determination condition and a second determination condition based on the tangent vector function model, based on the control instruction through the arithmetic unit, so that the target box satisfying the first determination condition is marked as a first type box, the target box satisfying the second determination condition is marked as a second type box, and the target box other than the first type box and the second type box in the target boxes is marked as a zeroth type box.

The second generation module 1005 is configured to generate a plurality of tracking points in the first type box, the second type box, and the zeroth type box respectively, and connect the plurality of tracking points to generate an intersection line of the first parametric curved surface and the second parametric curved surface, based on the control instruction through the arithmetic unit.

The display module 1006 is configured to display the intersection line of the first parametric curved surface and the second parametric curved surface through a display unit.

According to embodiments of the present invention, any number of the first generation module 1001, the division module 1002, the construction module 1003, the marking module 1004, the second generation module 1005, and the display module 1006 may be combined into one module to be implemented or any one of the modules may be divided into a plurality of modules. Alternatively, at least part of the function of one or more of these modules may be combined with at least part of the function of other modules and implemented in one module. According to embodiments of the present invention, at least one of the first generation module 1001, the division module 1002, the construction module 1003, the marking module 1004, the second generation module 1005, and the display module 1006 may be implemented at least partially as a hardware circuit, such as a field programmable gate array (FPGA), a programmable logic array (PLA), a system on a chip, a system on a substrate, a system on a package, an application specific integrated circuit (ASIC), or may be implemented by any other reasonable means of hardware or firmware that integrates or packages a circuit, or may be implemented in any one of or a suitable combination of three implementation methods of software, hardware and firmware. Alternatively, at least one of the first generation module 1001, the division module 1002, the construction module 1003, the marking module 1004, the second generation module 1005, and the display module 1006 may be implemented at least partially as a computer program module, which when executed, may perform a corresponding function.

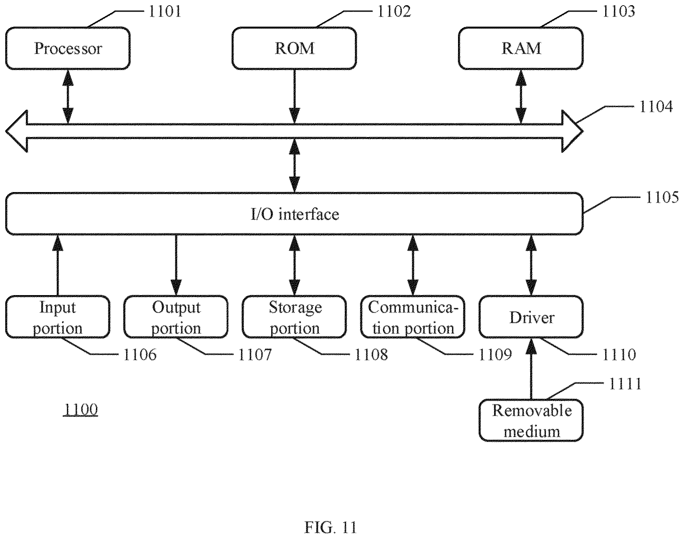

FIG. 11 schematically shows a block diagram of an electronic device suitable for implementing a method of tracking an intersection line of curved surfaces according to embodiments of the present invention.

As shown in FIG. 11, the electronic device 1100 according to embodiments of the present invention includes a processor 1101 that may perform various appropriate actions and processes according to programs stored in a read-only memory (ROM) 1102 or programs loaded from a storage portion 1108 into a random access memory (RAM) 1103. The processor 1101 may include, for example, a general-purpose microprocessor (e.g., a CPU), an instruction set processor and/or a related chipset and/or a special-purpose microprocessor (e.g., an application-specific integrated circuit (ASIC)), etc. The processor 1101 may also include an on-board memory for caching purposes. The processor 1101 may include a single processing unit or a plurality of processing units for performing different actions of a method flow according to embodiments of the present invention.

In the RAM 1103, various programs and data required for the operation of the electronic device 1100 are stored. The processor 1101, the ROM 1102 and the RAM 1103 are connected to each other through a bus 1104. The processor 1101 performs various operations of the method flow according to embodiments of the present invention by executing the programs in the ROM 1102 and/or the RAM 1103. It should be noted that the programs may also be stored in one or more memories other than the ROM 1102 and the RAM 1103. The processor 1101 may also perform various operations of the method flow according to embodiments of the present invention by executing the programs stored in the one or more memories.

According to embodiments of the present invention, the electronic device 1100 may also include an input/output (I/O) interface 1105, and the input/output (I/O) interface 1105 is also connected to the bus 1104. The electronic device 1100 may also include one or more of the following components connected to the I/O interface 1105: an input portion 1106 including a keyboard, a mouse, etc.; an output portion 1107 including a cathode ray tube (CRT), a liquid crystal display (LCD), etc., and a speaker, etc.; a storage portion 1108 including a hard disk, etc.; and a communication portion 1109 including a network interface card such as a LAN card, a modem, etc. The communication portion 1109 performs communication processing via a network such as the Internet. A drive 1110 is also connected to the I/O interface 1105 as needed. A removable medium 1111, such as a magnetic disk, an optical disk, a magneto-optical disk, a semiconductor memory, etc., is mounted on the drive 1110 as needed so that a computer program read therefrom is installed into the storage portion 1108 as needed.

The present invention further provides a computer-readable storage medium. The computer-readable storage medium may be included in the device/apparatus/system described in the above-mentioned embodiments, and may also exist alone without being assembled into the device/apparatus/system. The computer-readable storage medium described above carries one or more programs, and when the one or more programs are executed, the method according to embodiments of the present disclosure may be implemented.

According to embodiments of the present invention, the computer-readable storage medium may be a nonvolatile computer-readable storage medium. The computer-readable storage medium may include, for example, but are not limited to, a portable computer disk, a hard disk, a random access memory (RAM), a read only memory (ROM), an erasable programmable read only memory (EPROM or flash memory), a portable compact disk read only memory (CD-ROM), an optical storage device, a magnetic storage device, or any suitable combination of the above. In the present invention, the computer-readable storage medium may be any tangible medium that contains or stores a program that may be used by or in conjunction with an instruction execution system, apparatus, or device. For example, according to embodiments of the present invention, the computer-readable storage medium may include one or more memories other than the ROM 1102 and/or the RAM 1103 and/or the ROM 1102 and the RAM 1103 described above.

Embodiments of the present invention further include a computer program product which includes a computer program. The computer program includes program code for performing the method illustrated in the flowchart. When the computer program product runs on the computer system, the program code is used to enable the computer system to implement the method of tracking an intersection line of curved surfaces provided by embodiments of the present invention.

When the computer program is executed by the processor 1101, the above-mentioned functions defined in the system/apparatus of embodiments of the present disclosure are performed. According to embodiments of the present disclosure, the system, apparatus, module, unit, etc. described above may be realized by the computer program module.

In an embodiment, the computer program may rely on a tangible storage media such as an optical storage device and a magnetic storage device. In another embodiment, the computer program may also be transmitted and distributed in a form of signals on a network media, downloaded through the communication section 1109 and installed, and/or installed from the removable medium 1111. The program code contained in the computer program may be transmitted by any appropriate network medium, including but not limited to: wireless, wired, etc., or any suitable combination of the above.

In such an embodiment, the computer program may be downloaded from the network via the communication portion 1109 and installed, and/or installed from the removable medium 1111. The computer program, when executed by the processor 1101, performs the functions described above defined in the system of the embodiments of the present invention. According to embodiments of the present invention, the system, device, apparatus, module, unit, etc. described above may be implemented by the computer program module.

According to embodiments of the present invention, program codes for implementing the computer programs provided by embodiments of the present invention may be written in one programming language or any combination of more programming languages. Specifically, the computing programs may be implemented using advanced procedure-oriented and/or object-oriented programming languages, and/or assembler/machine languages. Programming languages include but are not limited to Java, C++, Python, "C" or similar programming languages. The program codes may be executed entirely on a user computing device, partially on a user device and partially on a remote computing device, or entirely on a remote computing device or server. In situations involving the remote computing device, the remote computing device may be connected to the user computing device through any kind of network, including a local area network (LAN) or a wide area network (WAN), or the user computing device may be connected to an external computing device (for example, using an Internet service provider to connect via the Internet).

The flowcharts and block diagrams in the drawings illustrate the architecture, functionality, and operation of possible implementations of systems, methods and computer program products according to various embodiments of the present invention. In this regard, each block in the flowcharts or block diagrams may represent a module, program segment, or portion of code, which contains one or more executable instructions for implementing the specified logical function. It should also be noted that, in some alternative implementations, the functions noted in the blocks may occur out of the order noted in the drawings. For example, two blocks shown in succession may, in fact, be executed substantially concurrently, or the two blocks may sometimes be executed in a reverse order, depending upon the functionality involved.

It should also be noted that each block of the block diagrams or flowcharts, and combinations of the blocks in the block diagrams or flowcharts, may be implemented by using a special purpose hardware-based system that performs the specified functions or operations, or may be implemented using a combination of a special purpose hardware and computer instructions.

Those skilled in the art will appreciate that features recited in the various embodiments of the present invention and/or the claims may be combined and/or incorporated in a variety of ways, even if such combinations or incorporations are not clearly recited in the present invention. In particular, the features recited in the various embodiments of the present invention and/or the claims may be combined and/or incorporated without departing from the spirit and teachings of the present invention, and all such combinations and/or incorporations fall within the scope of the present invention.

Embodiments of the present invention have been described above. However, these embodiments are for illustrative purposes only, and are not intended to limit the scope of the present invention. Although the various embodiments are described above separately, this does not mean that the measures in the various embodiments may not be advantageously used in combination. The scope of the present invention is defined by the appended claims and their equivalents. Without departing from the scope of the present invention, those skilled in the art may make various substitutions and modifications, and these substitutions and modifications should all fall within the scope of the present invention.

## Claims

1. A method of tracking an intersection line of curved surfaces performed by an electronic device, comprising:

   generating (S101) a four-dimensional space parameter curve associated with a first parametric curved surface and a second parametric curved surface according to a function model of the first parametric curved surface and a function model of the second parametric curved surface, and storing the four-dimensional space parameter curve in a register, based on a control instruction through an arithmetic unit, in response to the control instruction generated by a controller;
   dividing (S102) a parameter space corresponding to the first parametric curved surface into a plurality of first curved surface boxes and dividing a parameter space corresponding to the second parametric curved surface into a plurality of second curved surface boxes so that intersecting boxes among the plurality of first curved surface boxes and the plurality of second curved surface boxes are determined as target boxes, and storing the target boxes in the register, based on the control instruction through the arithmetic unit;
   reading (S103) the four-dimensional space parameter curve from the register, constructing a tangent vector function model for the four-dimensional space parameter curve, and storing the tangent vector function model in the register. based on the control instruction through the arithmetic unit;
   reading (S104) the tangent vector function model from the register, and establishing a first determination condition and a second determination condition based on the tangent vector function model, based on the control instruction through the arithmetic unit, so that the target box satisfying the first determination condition is marked as a first type box, the target box satisfying the second determination condition is marked as a second type box, and the target box other than the first type box and the second type box in the target boxes is marked as a zeroth type box;
   generating (S105) a plurality of tracking points in the first type box, the second type box and the zeroth type box respectively, and connecting the plurality of tracking points to generate an intersection line of the first parametric curved surface and the second parametric curved surface, based on the control instruction through the arithmetic unit; and
   displaying (S106) the intersection line of the first parametric curved surface and the second parametric curved surface through a display unit.

2. The method according to claim 1,
   wherein the first parametric curved surface and the second parametric curved surface are parametric curved surfaces based on various types of curved surface entities and established according to a predetermined drawing scale, and the various types of curved surface entities at least comprise: a mechanical component curved surface entity, a human body part curved surface entity, and an animation object curved surface entity.

3. The method according to claim 1, the establishing a first determination condition and a second determination condition based on the tangent vector function model comprises:

   inputting the target box into the tangent vector function model, outputting a target solution set, and storing the target solution set in the register, based on the control instruction through the arithmetic unit; and
reading the target solution set from the register, and establishing the first determination condition and the second determination condition by using the target solution set related to the tangent vector function model, based on the control instruction through the arithmetic unit.

4.  The method according to claim 3, wherein,

the tangent vector function model comprises a first component vector function model, a second component vector function model, a third component vector function model, and a fourth component vector function model;
the target solution set output using the tangent vector function model comprises: a first solution set output through the first component vector function model, a second solution set output through the second component vector function model, a third solution set output through the third component vector function model, and a fourth solution set output through the fourth component vector function model;
the first determination condition is that: a zero solution exists in an intersection of the first solution set and the second solution set, or a zero solution exists in an intersection of the third solution set and the fourth solution set; and
the second determination condition is that: a zero solution exists at an intersection of the first solution set, the second solution set, the third solution set, and the fourth solution set.

5.  According to the method of claim 4, the generating a plurality of tracking points in the first type box, the second type box, and the zeroth type box respectively comprises:

generating a plurality of different types of second tracking points for the second type box, wherein the different types of second tracking points at least comprises: a tangent point in a case that the first parametric curved surface and the second parametric curved surface are tangent to a point, a tangent point in a case that the first parametric curved surface and the second parametric curved surface are tangent to a curve, a tangent point in a case that the first parametric curved surface and the second parametric curved surface are coincident, a tangent point in a case that the first parametric curved surface and the second parametric curved surface are tangent to an isolated tangent point, and a tangent point in a case that the first parametric curved surface and the second parametric curved surface are tangent to a minimal loop;
generating a plurality of zeroth type tracking points by tracking the zeroth type box, wherein the zeroth type tracking point is a regular intersection point in a case that the first parametric curved surface or the second parametric curved surface is regularly intersected;
generating a plurality of different types of first tracking points for the first type box, wherein the plurality of different types of first tracking points at least comprises: a finite number of singular points existing on the first parametric curved surface or the second parametric curved surface, and a singular point on a singular curve existing on the first parametric curved surface or the second parametric curved surface; and
determining a third type box from the zeroth type box to generate a plurality of third tracking points for the third type box, wherein the third tracking point is a self-intersection point of the first parametric curved surface or the second parametric curved surface.

6.  The method according to claim 5, wherein the generating a plurality of different types of second tracking points for the second type box comprises:

constructing a second discrimination function system according to the tangent vector function model and the four-dimensional space parameter curve; and
subdividing the second type box, according to a number of solutions of the second discrimination function system, to generate the plurality of different types of second tracking points according to the subdivided second type box.

7.  The method according to claim 5, wherein the generating a plurality of different types of first tracking points for the first type box comprises:

constructing a sub function system for the first parametric curved surface or the second parametric curved surface;
constructing a first discrimination function system according to the sub function system and the four-dimensional space parameter curve; and
subdividing the first type box, according to a number of solutions of the first discrimination function system, to generate the plurality of different types of first tracking points according to the subdivided first type box.

8. The method according to claim 5, wherein the determining a third type box from the zeroth type box comprises:

establishing a third determination condition according to the tangent vector function model, wherein the third determination condition is that: at least one of a first sub condition, a second sub condition, a third sub condition, and a fourth sub condition is satisfied; the first sub condition is that: no zero solution exists in the first solution set and no zero solution exists in the third solution set; the second sub condition is that: no zero solution exists in the first solution set and no zero solution exists in the fourth solution set; the third sub condition is that: no zero solution exists in the second solution set and no zero solution exists in the third solution set; and the fourth sub condition is that: no zero solution exists in the second solution set and no zero solution exists in the fourth solution set; and
determining the zeroth type box satisfying the third determination condition as an exclusion box, and determining a box other than the exclusion box and a regular box in the zeroth type box as the third type box, wherein the regular box is a box corresponding to the zeroth type tracking point.

9. An apparatus of tracking an intersection line of curved surfaces, comprising:

a first generation module (1001) configured to, generate a four-dimensional space parameter curve associated with a first parametric curved surface and a second parametric curved surface according to a function model of the first parametric curved surface and a function model of the second parametric curved surface, and store the four-dimensional space parameter curve in a register, based on a control instruction through an arithmetic unit, in response to the control instruction generated by a controller;
a division module (1002) configured to divide a parameter space corresponding to the first parametric curved surface into a plurality of first curved surface boxes and divide a parameter space corresponding to the second parametric curved surface into a plurality of second curved surface boxes so that intersecting boxes among the plurality of first curved surface boxes and the plurality of second curved surface boxes are determined as target boxes, and storing the target boxes in the register, based on the control instruction through the arithmetic unit;
a construction module (1003) configured to read the four-dimensional space parameter curve from the register, construct a tangent vector function model for the four-dimensional space parameter curve, and store the tangent vector function model in the register, based on the control instruction through the arithmetic unit;
a marking module (1004) configured to read the tangent vector function model from the register, and establish a first determination condition and a second determination condition based on the tangent vector function model, based on the control instruction through the arithmetic unit, so that the target box satisfying the first determination condition is marked as a first type box, the target box satisfying the second determination condition is marked as a second type box, and the target box other than the first type box and the second type box in the target boxes is marked as a zeroth type box;
a second generation module (1005) configured to generate a plurality of tracking points in the first type box, the second type box, and the zeroth type box respectively, and connect the plurality of tracking points to generate an intersection line of the first parametric curved surface and the second parametric curved surface, based on the control instruction through the arithmetic unit; and
a display module (1006) configured to display the intersection line of the first parametric curved surface and the second parametric curved surface through a display unit.

10. An electronic device, comprising:

one or more processors; and
a storage apparatus configured to store one or more programs,
wherein the one or more programs, when executed by the one or more processors, cause the one or more processors to execute the method according to any one of claims 1 to 8.

S101

In response to a control instruction generated by a controller, a four-dimensional space parameter curve associated with a first parametric surface and a second parametric surface is generated according to a function model of the first parametric surface and a function model of the second parametric surface, and the four-dimensional space parameter curve is stored in a register, based on the control instruction through an arithmetic unit

S102

Based on the control instruction through the arithmetic unit, a parameter space corresponding to the first parametric surface is divided into a plurality of first surface boxes, and a parameter space corresponding to the second parametric surface is divided into a plurality of second surface boxes, so that intersecting boxes in the plurality of first surface boxes and the plurality of second surface boxes are determined as target boxes, and the target boxes are stored in the register

S103

Based on the control instruction through the arithmetic unit, the four-dimensional space parameter curve is read from the register, a tangent vector function model for the four-dimensional space parameter curve is constructed, and the tangent vector function model is stored in the register

S104

Based on the tangent vector function model, the tangent vector function model is read from the register based on the control instruction through the arithmetic unit, and a first determination condition and a second determination condition are established, so that the target box satisfying the first determination condition is marked as a first type box, the target box satisfying the second determination condition is marked as a second type box, and the target box other than the first type box and the second type box in the target boxes is marked as a zeroth type box

S105

Based on the control instruction through the arithmetic unit, a plurality of tracking points in the first type box, the second type box and the zeroth type box are generated respectively, and the plurality of tracking points are connected to generate an intersection line of the first parametric surface and the second parametric surface

S106

The intersection line of the first parametric surface and the second parametric surface is displayed through a display unit

FIG. 1

(1)        (2)        (3)

FIG. 2

Loop        Curve

FIG. 3

FIG. 4

| $\#(\Delta_g)$ | Geometry | Geometric description | Algebraic description |
|---|---|---|---|
| No solution | | Two curved surfaces do not intersect | $\#(\Delta_B)=0,$ $\#(\psi\cap L)=0.$ |
| | | Two curved surfaces do not intersect | $\#(\Delta_B)=0,$ $\#(\psi\cap L)=0.$ |
| | | Two curved surfaces intersect transversely | $\#(\Delta_B)=0,$ $\#(\Phi\cap L)=k>0.$ |
| | | Two curved surfaces intersect transversely | $\#(\Delta_B)=0,$ $\#(\psi\cap L)=k>0.$ |
| Finite solution | | One curved surface is tangent to another at an isolated intersection point | $\#(\Delta_B)=1,$ $\#(\psi\cap L)=0,$ $\#(\Phi\cap L)=k>0.$ |
| | | One curved surface is tangent to another at a point of the intersection curve | $\#(\Delta_B)=1,$ $\#(\psi\cap L)=k>0,$ $\#(\Phi\cap L)=k>0.$ |
| Infinite solution | | Two curved surfaces are tangent to each other along an intersection curve | $\#(\Delta_B)=\infty,$ $\#(\psi\cap L)=k>0.$ |
| | | Two curved surfaces partially overlap | $\#(\Delta_B)=\infty,$ $\#(\Delta_D\cap L)=\infty,$ $\#(\Delta_B\cap L\cap L_1)=1.$ |

FIG. 5

FIG. 6

| #($\Delta_g$) | Geometry | Geometric description | Algebraic description |
|---|---|---|---|
| No solution | | Two regular curved surfaces intersect | #($\Sigma_1$)=0, #($\Sigma_2$)=0, #($\Delta_B$)=0, #($\psi \cap L$)=k>0. |
| Finite solution | | Cusp curve intersect transversely a regular curved surface | #($\Sigma_1$)=$\infty$, #($\Sigma_2$)=0, #($\Delta_B$)=1, #($\psi \cap L$)=k>0. |
| | | A cusp-point passes through a regular curved surface | #($\Sigma_1$)=1, #($\Sigma_2$)=0, #($\Delta_B$)=1, #($\psi \cap L$)=k>0. |
| | | Two curved surfaces intersect at cusp-point, and the intersection point is isolated | #($\Sigma_1$)=1, #($\Sigma_2$)=1, #($\Delta_B$)=1, #($\psi \cap L$)=0. |
| | | Two curved surfaces intersect at cusp-point where generates regular curve | #($\Sigma_1$)=1, #($\Sigma_2$)=1, #($\Delta_B$)=1, #($\psi \cap L$)=k>0. |
| | | A cusp-curve intersect another cusp-curve | #($\Sigma_1$)=$\infty$, #($\Sigma_2$)=$\infty$, #($\Delta_B$)=1, #($\psi \cap L$)=k>0. |
| Infinite solution | | A cusp-curve is embedded into a regular curved surface | #($\Sigma_1$)=$\infty$, #($\Sigma_2$)=0, #($\Delta_B$)=$\infty$, #($\Delta_B \cap L$)=1, #($\psi \cap L$)=k>0. |
| | | A cusp curved surface overlaps with another cusp curved surface | #($\Sigma_1$)=$\infty$, #($\Sigma_2$)=$\infty$, #($\Delta_B$)=$\infty$, #($\Delta_B \cap L$)=1. |

FIG. 7

$$\Psi \cap \{R_1(p,q) = R_2(u,v)\} \cap B$$

| No solution | Finite solution | Infinite solution |
|---|---|---|
| No self-intersection point | $C_3$-singular case | $\Psi \cap \{R_1(p,q) = R_2(u,v)\} \cap L \cap B$ |

| | | Finite solution |
|---|---|---|
| | | $C_3$-singular curve |

FIG. 8

| $\#(\Delta_B)$ | Geometry | Geometric description | Algebraic description |
|---|---|---|---|
| No solution | | The two parts of the intersection line are very close | $\#(\Delta_B)=0.$ |
| Finite solution | | A self-intersection curve intersects transversely a regular curved surface | $\#(\Delta_B)=1.$ |
| | | Two self-intersection curves intersect transversely | $\#\{R_1(s,t) = R_2(u,v) = R_1(p,q) = R_2(p', q')\} \cap B = 1.$ |
| Infinite solution | | A self-intersection curve is tangent to a regular curved surface | $\#(\Delta_B)=\infty,$ $\#(\Delta_B \cap L)=1.$ |
| | | Two regular curves partially overlap | $\#\{R_1(s,t)=R_2(u,v)=R_1(p,q)=R_2(p',q')\} \cap B=\infty,$ $\#\{R_1(s,t)=R_2(u,v)=R_1(p,q)=R_2(p',q'), L\} \cap B=1.$ |

FIG. 9

FIG. 10

FIG. 11

Europäisches
Patentamt

European
Patent Office

Office européen
des brevets

# EUROPEAN SEARCH REPORT

**Application Number**

EP 23 18 8564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 112 541 158 A (ACAD OF MATHEMATICS AND SYSTEMS SCIENCE CHINESE ACAD OF SCIENCES) 23 March 2021 (2021-03-23) * abstract * | 1-10 | INV. G06T17/30 |
| A | PARK YOUNGJIN ET AL: "Surface-Surface-Intersection Computation Using a Bounding Volume Hierarchy with Osculating Toroidal Patches in the Leaf Nodes", COMPUTER-AIDED DESIGN, ELSEVIER PUBLISHERS BV., BARKING, GB, vol. 127, 8 May 2020 (2020-05-08), XP086238076, ISSN: 0010-4485, DOI: 10.1016/J.CAD.2020.102866 [retrieved on 2020-05-08] * abstract * * sections 3, 4 * | 1-10 | |
| A | YOUNGJIN PARK: "Self-intersection computation for freeform surfaces based on a regional representation scheme for miter points", COMPUTER AIDED GEOMETRIC DESIGN, vol. 86, March 2021 (2021-03), pages 1-13, XP093158597, AMSTERDAM, NL ISSN: 0167-8396, DOI: 10.1016/j.cagd.2021.101979 * abstract * * sections 3, 4 * | 1-10 | **TECHNICAL FIELDS SEARCHED (IPC)** G06T |

-/--

The present search report has been drawn up for all claims

| Place of search | Date of completion of the search | Examiner |
|---|---|---|
| Berlin | 2 May 2024 | Bouchaâla, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Application Number

EP 23 18 8564

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEYKIN A ET AL: "Newton's method with deflation for isolated singularities of polynomial systems", THEORETICAL COMPUTER SCIENCE, ELSEVIER, AMSTERDAM, NL, vol. 359, no. 1-3, 14 August 2006 (2006-08-14), pages 111-122, XP027887237, ISSN: 0304-3975 [retrieved on 2006-08-14] * abstract * ----- | 1-10 | |

TECHNICAL FIELDS SEARCHED (IPC)

The present search report has been drawn up for all claims

| Place of search | Date of completion of the search | Examiner |
|---|---|---|
| Berlin | 2 May 2024 | Bouchaâla, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 8564

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2024

| Patent document cited in search report | Publication date | Patent family member(s) | Publication date |
|---|---|---|---|
| CN 112541158 A | 23-03-2021 | NONE | |